(19) Europäisches Patentamt / European Patent Office / Office européen des brevets

(11) EP 1 940 904 B1

# (12) EUROPEAN PATENT SPECIFICATION

(45) Date of publication and mention of the grant of the patent:
**17.02.2010 Bulletin 2010/07**

(21) Application number: **06802594.9**

(22) Date of filing: **29.08.2006**

(51) Int Cl.:
***C08G 63/00*** *(2006.01)*

(86) International application number:
**PCT/US2006/033766**

(87) International publication number:
**WO 2007/027715 (08.03.2007 Gazette 2007/10)**

## (54) MOISTURE PERMEABLE POLYESTER-BASED ELASTOMER FILM AND PROCESS FOR THE MANUFACTURE THEREOF

FEUCHTIGKEITSDURCHLÄSSIGER ELASTOMERFILM AUF POLYESTERBASIS UND HERSTELLUNGSVERFAHREN DAFÜR

FILM ELASTOMERE A BASE DE POLYESTER PERMEABLE A L’HUMIDITE ET PROCEDE DE FABRICATION DE CE DERNIER

(84) Designated Contracting States:
**DE FR GB IT**

(30) Priority: **30.08.2005 US 712643 P**

(43) Date of publication of application:
**09.07.2008 Bulletin 2008/28**

(73) Proprietors:
- **E.I. DU PONT DE NEMOURS AND COMPANY**
  **Wilmington, DE 19898 (US)**
- **Du Pont Kabushiki Kaisha**
  **Tokyo 153-0064 (JP)**
- **UNITIKA LTD.**
  **Uji-city 611-0021 (JP)**

(72) Inventors:
- **SUZUKI, Hiroko**
  **Kanagawa 216-006 (JP)**
- **MATSUI, Norikazu**
  **Kyoto 610-0121 (JP)**
- **MIYAKE, Munehiro**
  **Kyoto 611-0021 (JP)**

(74) Representative: **Heinemann, Monica et al**
**Abitz & Partner**
**Patentanwälte**
**Hörselbergstrasse 5**
**81677 München (DE)**

(56) References cited:
**EP-A- 1 193 289**
**EP-A- 1 352 920**
**WO-A2-2005/001229**
**WO-A2-2006/076722**
**US-A1- 2001 046 581**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 940 904 B1

## Description

### Field of the Invention

The present invention is directed to a moisture permeable polyester-based elastomer film and a process for the manufacture thereof, and in particular, to a polyester-based elastomer film that has been subjected to a stretching treatment having excellent mechanical properties, antiblocking properties, and moisture permeability; a process for the manufacture thereof; and specifically, it is directed to a non-porous moisture permeable polyester-based elastomer film which may be used in garment materials, home interior materials, roof underlayment materials, healthcare materials, agricultural materials, and the like, and process for the manufacture thereof.

### Background of the Invention

There has been a desire for a waterproof and moisture permeable material for garment materials, home interior materials, healthcare materials, and agricultural materials. Such materials would improve comfort by suppressing sticky and steamy feelings caused by perspiration or dew condensation while simultaneously minimizing penetration from the outside of liquid water such as rainwater and the like.

Treatments to impart moisture permeability have been used, for example, as disclosed in Japanese Patent Application Publication S58-144178, for coating a fiber fabric with a hydrophilic resin such as a polyurethane resin, a polyaminoacid resin, a polyester resin, a polyamide resin, and the like. However, this type of approach has had problems with resistance to laundering and a drop in moisture permeability with long use.

Also, fluororesin porous films and micro-porous polyurethane-based resin type films are being used as highly moisture permeable materials in garment and industrial materials. These porous films call for generating voids by stretching or by a laser treatment. For example, Japanese Patent Application Publication S63-21647 proposes a porous film mainly comprised of a fluororesin; Japanese Patent Application Publication H4-300823 proposes a microporous film comprised of a polymer having rubber elasticity such as a polyurethane. However, these procedures have essentially produced porous products, suffering not only from the high manufacturing cost of pore generation, but also from the difficulty in controlling such pore generation when an effort is made to increase the moisture transmission rate, which adversely affects the ability to prevent liquid water penetration from the outside, resulting in reduced waterproofing. In addition, these resins have been deficient in that they generate harmful gases during combustion, which is an environmentally unfavorable problem.

Unstretched polyester-based elastomer films are examples of highly moisture permeable non-porous films. For example, Japanese Patent Application Publication H10-258484 proposes a film obtained by laminating a polyurethane resin layer to an elastomer layer by coating these materials on a mold release support. However, the problem with this approach has been the need to peel off the mold release support before or after lamination to fabrics and the like. In addition, Japanese Patent Application Publication H11-48417, Japanese Patent Application Publication H11-170461, Japanese Patent Application Publication 2002-337294, and Japanese Patent Application Publication 2003-49492 propose moisture permeable waterproof fabrics prepared by directly melt-extruding a polyester-based elastomer resin onto fiber fabrics. However, because of their rubber elasticity, such unstretched films, have suffered from problems during mechanical processing, such as that when pierced with a sewing machine needle, the needle tends to cling to the film, or that then when attempting to put on clothing made from the fabrics, the wearer can get caught up in the garment.

Japanese Patent Application Publication H11-166045 proposes a polyester film with 1-30 percent by weight of a polytetramethyleneoxide glycol incorporated therein and Japanese Patent Application Publication 2001-158071 and Japanese Patent Application Publication 2001-172409 propose polyester films obtained by incorporating 5 to 30 percent by weight of polytetramethyleneoxide glycol. However, these films have never shown sufficient moisture permeability.

Japanese Patent Application Publication H2-20425 proposes a film having a specific water vapor transmission rate that comprises a hydrophobic layer comprised of not more than 20 percent by weight of incorporated ethylene oxide units and a hydrophilic layer comprised of 25-68 percent by weight of incorporated ethylene oxide units. However, this film has such a high residual strain that it is deficient in film elastic recovery. Accordingly, when this film was laminated to fiber fabric to be used as a garment material, it failed to return to its original shape after repeated high stretching actions involving frequent bending around the elbow, remaining in an extended state, and resulting in the film sagging or wrinkling and eventually delaminating from the fiber fabrics; furthermore, since the film was unstretched, it had insufficient absolute mechanical properties, so that when combined with fabrics, for example, it had problems with hydrostatic pressure resistance and laundering resistance.

Japanese Patent No. 3083136 proposes a polyester resin composition with 50-80 percent of soft segments having a specific carbon/oxygen atomic ratio incorporated therein. However, this resin composition was highly cohesive causing the problem of a considerable deterioration in operability such as a high tendency for film blocking. As described in the examples of this reference, the undrawn film had insufficient absolute mechanical properties so that when it was

combined with fabrics there were problems in resistance to hydrostatic pressure and laundering resistance. The same reference describes films obtained by stretching the resin, but these had problems in that when a tenter stretching machine was used for stretching, the stretching operation was extremely difficult, the productivity was poor, and only a very low stretch ratio was possible. The films obtained at such a low stretch ratios were deficient as were the unstretched films, both suffering from the problems of a high tension set and/or insufficient absolute mechanical properties.

Therefore, it is conceivable to stretch this type of undrawn film in order to solve the above problems associated with unstretched polyester-based elastomer films. However, polyester-based elastomers exhibit extremely strong elastic recovery, making it very difficult to produce a film that is uniaxially or biaxially stretched, and thus no attempts have yet been made to manufacture such stretched films. That is, there have been technical problems in preparing stretched films by roll stretching that have minimal stretch irregularities and that are free from scratches or sticking to stretch rolls because of the low glass transition temperature of the elastomer. These problems have been circumvented by employing a method, for example, as described in Japanese Patent Application Publication 2002-219774, of first laminating a polyester-based elastomer to another polyester layer and then stretching. Accordingly, it has been difficult to prepare a stretched film from a polyester-based elastomer layer by itself.

It is an object of the present invention to solve the above problems and to provide a moisture permeable polyester-based elastomer film having excellent moisture permeability, mechanical properties such as residual strain, piercing resistance, and the like, low tension set, and excellent handling capability during production.

## Summary of the Invention

There is disclosed and claimed herein a moisture permeable polyester-based elastomer film comprising not less than one copolyetherester elastomer having a multiple number of repeating long chain ester units (I) and short chain ester units (II) connected head-to-tail via ester linkages, wherein said film has been subjected to a stretching treatment and has a tension set of not more than about 10 percent when elongated by 50 percent, and wherein said film comprises organic and/or inorganic particles as defined in claim 1.

The films of the present invention may further comprise at least one aliphatic acid amide. Further disclosed are a process for manufacturing a moisture permeable polyester-based elastomer film and a moisture permeable waterproof fabric comprising a polyester-based elastomer film with a fiber fabric laminated thereto.

## Detailed Description of the Invention

Hereafter, the present invention is explained in detail. The polyester-based elastomer used comprises a polyester block copolymer, said copolymer comprising not less than one copolyetherester elastomer having a multiple number of repeating long chain ester units (I) (represented by formula (i)) and short chain ester units (II) (represented by formula (ii) connected head-to-tail via ester linkages, wherein said film has been subjected to a stretching treatment, with the long chain ester units (I) constituting soft segments and the short chain ester units (II) constituting hard segments.

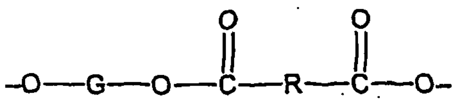

(i)

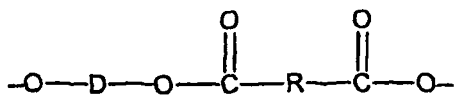

(ii)

In formulas (i) and (ii):

G is a divalent radical remaining after the removal of terminal hydroxyl groups from a poly(alkylene oxide)glycol having an average molecular weight of 400 to 4000, wherein the amount of ethylene oxide groups incorporated in said one or more copolyetheresters by the poly(alkylene oxide)glycol is from 20 to 68 weight percent, and preferably from 25 to 68 weight percent, based upon the total weight of the copolyetherester(s);

R is a divalent radical remaining after removal of carboxyl groups from a dicarboxylic acid having a molecular weight less than 300;

D is a divalent radical remaining after removal of hydroxyl groups from a diol having a molecular weight less than 250;

wherein said copolyetherester(s) contain from 25 to 80 weight percent short chain ester units.

Preferably, the polyester-based elastomer is preferably generated from at least one aromatic dicarboxylic acid or its ester derivative and at least one aliphatic diol.

Preferred aromatic dicarboxylic acids include terephthalic acid, isophthalic acid, phthalic acid, 2,6-napthalenedicarboxylic acid, 5-sodiumsulfoisophthalic acid, and the like. A portion of the aromatic dicarboxylic acid component may be replaced with an aliphatic dicarboxylic acid such as oxalic acid, succinic acid, glutaric acid, adipic acid, pimelic acid, suberic acid, sebacic acid, azelaic acid, dodecane dicarboxylic acid, dimer acid, maleic anhydride, maleic acid, fumaric acid, itaconic acid, citraconic acid, mesaconic acid, cyclohexane dicarboxylic acid, and the like, or a hydroxy carboxylic acid such as 4-hydroxybenzoic acid, ε-caprolactone, lactic acid, or the like.

Preferred aliphatic diols include aliphatic diols such as 1,4-butanediol, ethylene glycol, trimethylene glycol, pentamethylene glycol, hexamethylene glycol, neopentyl glycol and the like, alicyclic diols such as 1,4-cyclohexane dimethanol, and the like. A portion of the aliphatic diol may be replaced by an aromatic diol such as xylylene glycol, and the like.

The hard segments may be polyesters derived from the above dicarboxylic and diol components or copolymerized polyesters from a combination of two or more of these dicarboxylic and diol components.

The content of the short chain ester units (II) is 25 to 80 percent by weight, preferably 40 to 60 percent by weight of the weight of the copolyetherester. A level of less than 25 percent by weight of the short chain ester units (II) can substantially slow the crystallization rate and make the copolyetherester too tacky to be handled with ease. A level exceeding-about 80 percent by weight can cause the copolyester to be too hard to be suitably used.

In particular, when copolymerized with soft segments of an amorphous component, in order to optimize retention of crystallinity for the resultant resin the hard segment is preferably poly(butylene terephthalate) formed from terephthalic acid or dimethyl terephthalate and 1,4-butane diol.

The long chain ester unit (I) preferably comprises a dicarboxylic acid component (R) having a molecular weight of less than 300 and a poly(alkyleneoxide) glycol (G) having a number average molecular weight of 400 to 4000.

The dicarboxylic acids suitable for use in the short chain ester units (II) may also be used for the dicarboxylic acid component (R).

Poly(alkylene oxide)glycol component (G) includes aliphatic polyether units, specifically, poly(ethylene oxide) glycol, poly(propylene oxide)glycol, poly(tetramethylene oxide)glycol, poly(hexamethylene oxide)glycol, ethylene oxide/propylene oxide copolymer, ethylene oxide/tetramethylene oxide copolymer and the like. In particular, for imparting film moisture permeability, it is preferred to have aliphatic polyether components with a carbon/oxygen atomic ratio of not more than 4, such as poly(ethylene oxide)glycol, poly(propylene oxide)glycol, poly(tetramethylene oxide)glycol, and the like. Additionally, the poly(alkylene oxide)glycol may have an aliphatic polyester component added thereto. The aliphatic polyester component may include poly(e-caprolactone), poly(butylene adipate), poly(enantholactone), poly(ethylene adipate), and the like.

Component G may comprise 0 to 100 weight percent, or preferably 10 to 100 weight percent, or more preferably 10 to 80 weight percent, or yet more preferably 20 to 80 weight percent of poly(ethylene oxide) units, based on the total weight of component G.

The poly(alkylene oxide)glycol may be one or more glycols where at least 70 percent by weight of the glycol component is preferably a glycol having a ratio of carbon atoms to oxygen atoms of 2.0:1 to 0.4:1. A ratio of carbon to oxygen atoms that exceeds 2.4:1 may reduce moisture permeability.

The polyester block copolymer may be manufactured by any known method. Examples include (1) subjecting a lower alcohol diester of an aromatic dicarboxylic acid, an aliphatic diol, and a soft segment component to an ester exchange reaction in the presence of a catalyst and polycondensing the resultant reaction products; (2) subjecting an aromatic dicarboxylic acid, an aliphatic diol, and a soft segment component to an esterification reaction in the presence of a catalyst and polycondensing the resultant reaction product; (3) adding a soft segment component to a hard segment component where the components may be randomized through ester exchange; and (4) joining hard segments to soft segments through a chain linking agent; and the like,

The polyester-based elastomer may be a single type or a blend of several polymer types. For example, the polyester used may be a copolyetherester elastomer, which will be described below, such as a polymer available under the trade name "Hytrel" (registered trademark) from E. I. DuPont de Nemours and Company, or a blend of two or more copolyetherester elastomers.

Organic or inorganic particles are added to the elastomer films of the present invention to improve antiblocking properties. The moisture permeable polyester-based elastomer film comprises 0.2 to 3.0 percent by weight, preferably 0.5 to 3.0 percent by weight, more preferably, 0.8 to 2.5 percent by weight of organic or inorganic particles with an

average particle size of 1.0 to 7.0 μm, or preferably 1.5 to 5.0 μm, or more preferably, 2.0 to 4.5 μm. Particles with an average particle size less than 1.0 μm can have insufficient ability to generate projections on the surface of the film, which could make it difficult to obtain sufficient antiblocking properties. Particles with an average particle size exceeding 7.0 μm will tend to slough off from the film, or, if stretched by a tenter type stretching method, will tend to cause the film to break because of the voids generated at the interface between the polymer and particles, resulting in a drop in productivity. Regarding the amount of the organic or inorganic particles added, a level less than 0.2 percent by weight (with respect to the weight of the film) could fail to give sufficient antiblocking properties; a level exceeding about 3.0 percent by weight could tend to cause the film to break. Examples of suitable inorganic particles include silica, alumina, calcium carbonate, calcium phosphate, magnesium carbonate, barium sulfate, glass beads, kaolinite, haloysite, talc, clay, mica, semectite, vermiculite. Examples of suitable organic particles include cross-linked polymethyl methacrylate resin, benzoguanamine-formaldehyde resin, melamine-formaldehyde resin, phenol-formaldehyde resin, low molecular weight polyethylene, and the like. These may be used singly or as a mixture of two or more.

The organic or inorganic particles preferably are spherical or spheroidial, for example, when observed under an electron microscope. By using such particle shapes, dispersion of the particles in the film is greatly improved and as a result breakage of the film during stretching can be reduced. When non-spherical or spheroidal particles are used, the particle size distribution will often not be uniform. The resultant aggregates may have a particle size several times that of a single particle diameter and when stretched by a tenter stretching method, can lead to breakage, thereby reducing productivity. Organic or inorganic particles may be surface treated with a silane coupling agent or the like.

The polyester-based elastomer film of this invention is preferably comprises 0.01 to 2.0 percent by weight, more preferably 0.05 to 1.0 percent by weight, and yet more preferably, 0.1 to 0.5 percent by weight of an aliphatic acid amide, wherein the weight percentages are based on the weight of the polyester-based elastomer plus the aliphatic acid amide. If the amount of an aliphatic amide added is less than 0.01 percent by weight, it will be substantially difficult to manufacture the film, because when the polyester elastomer is melt extruded from an extruder and brought into contact with a chill drum for quenching, the film will not release readily from the chill drum, and with the passage of time, will end up wrapping around the chill drum. If the amount of the aliphatic acid amide exceeds 2.0 percent by weight, it will not only be an unnecessary excess, but can sometimes result in the adherence of the aliphatic acid amide to the roll during production, particularly, adhering to the chill drum after the film has been melt extruded.

The preferred aliphatic amides are $C_{12-30}$ saturated primary amides, saturated secondary amides, and saturated tertiary amides. Specifically, lauramide, myristamide, palmitamide, stearamide, arachidamide, behenamide; bis amides such as ethylenebisstearamide, ethylenebisbehenamide, methylenebisstearamide, methylenebisbehenamide, and the like. Particularly preferred are widely available and inexpensive stearamide, ethylenebisstearamide, ethylenebisbehenamide, and the like.

If necessary, the moisture permeable polyester elastomer film of this invention can be further optionally compounded, in combination, in addition to the above organic or inorganic and aliphatic acid amides, with lubricating agents. Examples of lubricating agents include unsaturated acid amides such as erucamide, ethylenebiserucamide, ethylenebisoleamide, or like; aliphatic hydrocarbon compounds such as liquid paraffin, natural paraffin, synthetic paraffin, and the like; aliphatic acids such as stearic acid, lauric acid, hydroxy stearic acid, hardened castor oil, and the like; metal soaps, or metal salts of $C_{12-30}$ aliphatic acids such as calcium stearate, aluminum stearate, magnesium stearate, and the like; aliphatic acid esters of polyhydric alcohols such as glycerin aliphatic acid esters, sorbitan aliphatic acid esters, and the like; long chain ester waxes such as butyl stearate ester, montanic acid wax, and the like. These may used singly or as a mixture of two or more.

The organic or inorganic particles and/or aliphatic acid amide and other additives may be added to the polyester elastomer by any suitable method known in the art, including, but not limited to, making a masterbatch of additives in a polyester elastomer or adding them during the polymerization of the polyester elastomer.

The moisture permeable polyester elastomer film of this invention may optionally comprise a variety of additives such as an antioxidant, a UV absorber, a heat stabilizer, a flame retardant, an inorganic additive, an anti-static agent, a pigment, a antiweathering agent, and the like.

The film of this invention may be produced, for example, by feeding to an extruder a pelletized polyester block copolymer and a masterbatch prepared by adding organic or inorganic particles and an aliphatic acid amide to a polyester copolymer, heating and melting at 180 to 200 °C, extruding a T die into sheet form, bringing it, through an electrostatic casting process, into close contact with a chill drum controlled to a temperature of not higher than 28 °C for quenching, and then stretching at least uniaxially the resultant unstretched sheet to the desired thickness by a tenter-type stretching method.

The tenter-type stretching method is performed using a tenter-type stretching machine. This stretching machine, widely used in commercial production of films, comprises the following sections: a pre-heater, a stretcher, a heat setting region, and .a relaxation region, where heating is generally effected by hot air, and the sheet, with sheet edges gripped by clips, passes through each section. In the present invention an apparatus capable of continuously producing a product that is transversely least 500 mm wide may be used. In a tenter-type stretching process, a simultaneous biaxial stretching

method that uses a simultaneous biaxial tenter-type stretching machine to simultaneously stretch both in the machine and transverse directions may be used. Alternatively, a method of sequential stretching may be used that heats the unstretched sheet by roll heating or infrared heating, roll-stretches with two or more rolls having different circumferential speeds in the machine direction, and then stretches with a tenter-type transverse stretching machine. Particularly preferred for its superior productivity is a tenter-type simultaneous biaxial stretching method that accommodates a broad range of stretch ratios and permits stretching to high stretch ratios. With a tenter-type simultaneous biaxial stretching method, the unstretched sheet may be pre-stretched to a stretch ratio of 1 to 3 either in the machine or transverse direction, followed by biaxial stretching on a tenter-type simultaneous biaxial stretching machine.

Normalcy, in the case of stretched films of polyethylene terephthalate, polyamide resin, and the like, the higher the stretch ratio, the lower the water vapor permeability; but in the case of a stretched polyester block copolymer film, there is essentially no reduction in moisture permeability even when stretched to a high stretch ratio. The preferred area stretch ratios in this invention, which differ depending upon the stretching method, are be 5:1 to 25:1, more preferably 7:1 to 16:1. A ratio lower than 5:1 can fail to provide the film with sufficient mechanical properties, so that when the resultant film is laminated to fabric and made into a garment material, it will have lower resistance to hydrostatic pressure. On the contrary, a ratio exceeding 25:1 can lead to a more substantial film breakage during stretching, causing a problem in productivity.

Tenter-type stretching machines mostly call for heating the sheet with blown hot air and the sheet temperature is measured by a radiant thermometer (for example, a Model IT-550, a product of Horiba Seisakusho Co.). The sheet temperature is controlled to be at the desired stretch temperature $T_c$. The stretch temperature $T_c$ which will differ, depending upon the composition of the polyester block copolymer used, is normally 0 to 100°C, preferably 20 to 80°C, more preferably 30 to 60°C.

In the present invention, the relationship between the temperature at the tenter clip grip sections $T_E$ and the stretch temperature $T_C$ when stretching on a tenter-type stretching machine is preferably: $(T_C - 20) \leq T_E \leq (T_c + 20)$, and more preferably: $(T_c -10) \leq T_E \leq (T_C +10)$. If $(T_c - 20) > T_E$, the frequency of breakage from the sheet center portion will increase, while if $T_E > (T_c + 20)$, there will be an increased frequency of breakage from the edge sections. Incidentally, the tenter clip grip section temperature can also be measured by the aforementioned radiant thermometer.

In controlling the clip grip section temperature, if the process temperature for the heat setting section after stretching is about 140 °C or higher, there is a high probability of $T_E > (T_c + 20)$, and in such a case the clips will preferably be cooled with cold air or the like. If $(T_c - 20) > T_E$, it can become necessary to heat the clips with infrared heating or the like.

The sheet before being fed to the tenter-type stretching machine will preferably be thicker in the edge sections along the transverse direction than in the central portion; specifically, it is preferred that the thicknesses of the sheet over an about 50 mm range inward (toward the sheet central section) from the clips along the transverse direction of the sheet be greater than the thickness of the center sheet section. More specifically, with respect to the thickness of the sheet between the clips in the sheet transverse direction, the thickness in an about 50 mm range inward from the clips is preferably greater - preferably by 10 percent or more - than the average thickness of the sheet over a range excluding the about 50 mm section just inward from the clips.

The sheet thickness can be adjusted by adjusting the gap of the T die slit. The T die slit gap can be adjusted by operating adjustment push and pull bolts, thereby adjusting the specific positions of the T die slit.

The manufacture of films by a simultaneous biaxial stretching method in accordance with the present invention is explained hereinafter. First, the edges of the undrawn sheet are gripped by the clips of the tenter-type simultaneous biaxial stretching machine to carry out a simultaneous biaxial stretching at about 20 to about 80 °C, both in the machine and transverse direction to ratios of 2:1 and 4:1, respectively. Then, a heat treatment is carried out under a rate of relaxation of several percent at 120 to 190 °C for 3 to 20 seconds, the sheet is allowed to cool to room temperature, and wound at a rate of 20 to 200 m/min to obtain a film with the desired thickness.

A post-stretching heat treatment is preferable for reducing the film's thermal shrinkage; the heat treatment can be carried out by selecting from among known methods such as a blown hot air method, an infrared irradiation method, a microwave irradiation method, and the like. A blown hot air method is preferred because this allows uniform heating with precision. The preferred temperature of the heat treatment is about (Tm-100 °C) to (Tm-3°C), where Tm is a melting temperature of the polyester-based elastomer.

The thermal shrinkage of the film when held for 15 minutes at 160 °C is preferably not more than about 20 percent, more preferably not more than about 15 percent, and yet more preferably not more than about 10 percent. When a film with a thermal shrinkage exceeding about 15 percent is hot laminated to a piece of fabric, the laminated fabric tends to warp.

In order to further impart a specific property, the film may be subjected to a variety of conventionally known treatments such as irradiation with UV light, $\alpha$ rays, $\beta$ rays, $\gamma$ rays, electron beams and the like, corona treatment, plasma irradiation, flaming treatment, and the like. Further, the film may be coated with, or laminated to, resins such as polyamide, polyolefin, polyurethane, polyester, epoxy, and the like. Sometimes, the films may be vapor deposited with materials such as aluminum oxide or coated with silicon oxide, titanium oxide, or the like.

The polyester-based elastomer film of this invention preferably has a coefficient of dynamic friction of not more than about 1.5, and more preferably not more than about 1.0 as measured under JIS K7125 using a 50 g slip piece. Although JIS K7125 provides the use of a 200 g slip piece, a lighter 50 g piece as described herein above is used because the polyester-based elastomer film of this invention has a high impact absorption force, thus affecting the slippage if the slip piece is as much as 200 g. If the film has a coefficient of dynamic friction exceeding 1.5 and is subjected to pass-rolls in the film production or secondary post-production processing steps, it tends to wrap around the rolls; further, if such film is laminated to fabric or non-woven fabric and said fabric is mechanically processed for garment applications, the slip properties against mirror finish plated parts thereof will be poorer.

Because it has been stretched, the moisture permeable polyester-based elastomer film of this invention preferably has a residual strain when elongated by 50 percent as low as not more than 10 percent and more preferably, not more than 7 percent, and yet more preferably not more than 5 percent. If the film has a residual strain exceeding 10 percent and this film is laminated to fiber fabric to be used as a garment material, the film will at times fail to return to the original shape after repeated high stretching actions involving frequent bending as, for example, around the elbow, thereby remaining in an extended state and resulting in the film sagging or wrinkling and eventual delamination from the fiber fabrics.

In this invention, the "residual strain" is determined as follows: 10 mm wide and 150 mm long samples are prepared (typically 5 samples are run) and gripped, at 35 °C and 60 percent relative humidity, using an Autograph AGS-100G, a product of Shimadzu Seisakusho Co., with a chuck-to-chuck distance of 100 mm set as the origin (L0). The sample is stretched by 50 percent at a rate of 100 mm/min (i.e., the sample is stretched to a chuck-to-chuck distance of 150 mm), held for 10 seconds, and then the sample is allowed to return at the same speed to the origin (L0) (i.e., a chuck-to-chuck distance of 100 mm). The sample is removed from the chucks, and its length ($L_1$) between the chuck grips is measured after the above operation. The tension set when elongated by 50 percent is calculated from the following equation:

$$\text{(Tension set when elongated by 50\%)} = \{(L1 - L0)/L0\} \times 100$$

The moisture permeable polyester-based elastomer film of this invention has a moisture transmission rate as measured under JIS L1099 (A-1 method) of not less than 300 g/m$^2$·24hr, preferably not less than 1000 g/m$^2$·24hr, more preferably not less than 2500 g/m$^2$·24hr, and yet more preferably not less than 4000 g/m$^2$·24hr. If the film has a moisture transmission rate of less than 300 g/m$^2$·24hr, it will be difficult for it to dissipate moisture to the outside environment under normal conditions of use.

The moisture permeable polyester-based elastomer film of the present invention has a tensile strength (as calculated by averaging the tensile strengths for the machine and transverse directions) as provided under ASTM D-882 of not less than 30 MPa and preferably not less than 50 MPa. A film with a tensile strength less than 30 MPa has insufficient mechanical properties and if the film is laminated to fabric to be used as a garment fabric, the fabric can have poor hydrostatic pressure resistance.

The moisture permeable polyester-based elastomer film of this invention will preferably have a piercing resistance of not less than 150 N/mm and more preferably not less than 200 N/mm. If the film has a piercing resistance of less than 150 N/mm and is laminated to fabric to be used as a garment fabric, the film can suffer from the problem of pinhole formation and could be easily damaged when it comes into contact with projections during laundering over a long period of time. In this invention, the piercing resistance of a film is measured by fixing a 50 mm wide and 50 mm long sample (typically 5 samples are run) with a predetermined thickness, under wrinkle-free conditions, onto an aluminum disk that has an external diameter of 70 mm and a thickness of 2 mm with a 30 mm inside diameter hole drilled therethrough. A 1.0 mm diameter aluminum needle with a semi-circular tip having a 0.5 mm radius is pierced through the portion of the film portion situated above the hole drilled through the aluminum disk. The forced need to piece the films is recorded A suitable apparatus for the measurement is an Autograph (AG -100E), a product made by Shimadzu Seisakusho Co. at a piercing speed of 100 mm/min.

The moisture permeable polyester-based elastomer film of this invention is preferably 5 to 30 μm thick and more preferably 7 to 20 μm thick. A film with a thickness less than 5 μm will give inferior mechanical properties while one with a thickness greater than 30 μm will exhibit inferior moisture permeability.

The polyester-based elastomer film of this invention may also be laminated to paper, films, nets, sheets, and the like.

Suitable fiber fabrics include woven or knitted materials, non-woven fabrics, and the like. They may be made of natural fibers such as wool, silk, cotton, and the like; synthetic fibers such as polyamide-based fibers, including nylon 6 and nylon 66, polyester fibers, including polyethylene terephthalate (PET), polyacryoriitrile-based fibers, polyvinyl alcohol-based fibers; semi-synthetic fibers such as triacetate, and the like; or mixed spun fibers such as nylon 6/cotton,

polyethylene terephthalate/cotton, and the like.

The method of laminating the polyester-based elastomer film to fiber fabrics is preferably uses adhesives or bondable non-woven fabrics. Examples of suitable adhesives include include polyurethane adhesives, which are addition reaction products of polyols and diisocyanates; polyamide adhesives that are condensation reaction products of diamines and dicarboxylic acids; polyester adhesives that are condensation reaction products of polyols and dicarboxylic acids; acrylic adhesives such as ethyl acrylate and butyl methacrylate types and the like; vinyl type adhesives such as vinyl acetate and vinyl chloride types and the like; butyl rubber type adhesives; and rubbery adhesives such as chloroprene rubber adhesives or like. Polyurethane adhesives are preferred in view of the moisture permeability of the adhesive itself.

Suitable lamination methods include the use of a standard gravure coater, rotary screen, flat screen, applicator, and the like for applying the adhesive in spots, lines, checkerboard pattern, honeycomb pattern, and the like to the polyester-based elastomer film and fiber fabric, such that the entire surface is not covered. The adhesive should be applied to 20 to 70 percent, or preferably 25 to 50 percent of the total surface area. If the adhesive is applied to less than 20 percent of the surface area, there can be poor adhesion between the polyester-based elastomer film and fiber fabric, sometimes resulting in an interfacial delamination. On the other hand, if the adhesive is applied to more than 70 percent of the surface area, this can lower the moisture permeability performance.

The fiber fabric is preferably treated for water repellency. The water repellency treatment preferably provides a water repellency of not less than about 90 under JIS (Japan Industrial Standard) L1096 Spray Method. The water repellant includes agents known in the art, such as those prepared by diluting paraffinic water-repellants, silicone water-repellants, fluorine-based water-repellants, or the like in water, alcohol, or an organic solvent. The water repellent treatment may be applied using methods known in the art such as dipping the fiber fabric in a water-repellant agent, squeezing with a mangle, and heat treating the resulting fabric at about 170°C; spraying both sides of the fiber fabric or the non-film laminated face side with a water-repellent; or the like. The water repellency treatment may be carried out either before or after the polyester-based elastomer film is laminated to the fiber fabric.

The hydrostatic pressure resistance, as determined according to JIS L1092, of the moisture permeable waterproof fabric differs, depending upon the material and thickness of the fiber fabric, and should be not less than 50 kPa, preferably not less than 100 kPa, and more preferably not less than 150 kPa, as required for use in sportswear or the like. A fabric with a hydrostatic pressure resistance of less than 50 kPa may at times allow moisture from rain or other sources to penetrate into the inside.

The moisture permeable waterproof fabric should preferably have a hydrostatic pressure resistance retention after 100 launderings as determined according to JIS L0217 (103 rule) of not less than 90 percent, or preferably not less than 95 percent. If the hydrostatic pressure retention after 100 launderings is less than about 90 percent, the fabric can have poor resistance to repeated laundering.

The moisture permeable waterproof fabric should preferably have a moisture transmission rate as determined according to JIS L1099 (A-1 Method) of not less than 500 $g/m^2 \cdot 24$ hr, or preferably not less than 1000g $g/m^2 \cdot 24$ hr. If the moisture transmission rate of the moisture permeable waterproof fabric is less than 500g $g/m^2 \cdot 24$ hr, it can be difficult for the fabric to dissipate sufficient perspiration for use in sportswear or the like.

The moisture permeable polyester-based elastomer film of the present invention has excellent moisture permeability with a moisture transmission rate of not less than 300 $g/m^2 \cdot 24$ hr, excellent mechanical properties such as tensile strength, piercing resistance, and the like, a low tension set of not more than 10 percent when elongated by 50 percent and it thus is suitably used in garment materials and the like and also provides excellent handling characteristics during production.

## Examples

### Polymerization Example 1

44 parts by weight of dimethyl terephthalate, 51 parts by weight of a poly(alkylene oxide)glycol comprised of 65 percent by weight of units derived from ethylene oxide and 35 percent by weight of units derived from propylene oxide, 19 parts by weight of 1,4-butane diol (stoichiometric amount), 0.3 parts by weight of tetrabutyl titanate, 0.4 parts by weight of trimethyl trimellitate, 0.1 parts by weight of Irganox 1098 (a product of Japan Ciba Geigy Company) were charged to an autoclave and subjected to an ester exchange reaction at 220 °C. Then the reaction mixture was held at a reduced pressure of not higher than 133Pa (1 torr) to carry out a polymerization reaction at 250 °C, yielding a polyester block copolymer A.

### Polymerization Example 2

49 parts by weight of dimethyl terephthalate, 46 parts by weight of a poly(alkylene oxide) glycol comprised of 30 percent by weight of units derived from ethylene oxide and 70 percent by weight of units derived from propylene

oxide for the alkylene oxide group, 21 parts by weight of 1,4-butane diol (stoichiometric amount), 0.3 parts by weight of tetrabutyl titanate, 0.4 parts by weight of trimethyl trimellitate, 0.1 parts by weight of Irganox 1098 (a product of Japan Ciba Geigy Company) were charged in an autoclave and subjected to an ester exchange reaction at 220°C. Then the reaction mixture was held at a reduced pressure of not higher than 133Pa (1 torr) to carry out a polymerization reaction at 250°C, yielding a polyester block copolymer B.

Organic or inorganic particles

Inorganic particles A: SEAHOSTAR KE-P250, a product of Nippon Shokubai Co., Ltd. (Spherical silica, average particle size 2.5μm)
Inorganic particle B: SEAHOSTAR KE-P50, a product of Nippon Shokubai Co., Ltd. (Spherical silica, average particle size 0.5μm)
Inorganic particle C: SILISIA 310P, a product of Fuji Sylysia co., Ltd.(Amorphous silica, average particle size 2.7μm)
Inorganic particle D: SYLOSPHERE C-1510, a product of Fuji Sylysia co., Ltd. (Amorphous silica, average particle size 10μm)
Organic particle E: EPOSTAR MA9004, a product of Nippon Shokubai Co., Ltd. (Spherical cross-linked polymethyl methacrylate, average particle size 4.5μm)
Organic particle F: EPOSTAR S12, a product of Nippon Shokubai Co., Ltd. (Spherical melamine-formaldehyde condensate, average particle size 1.5μm)

Aliphatic Acid Amides

Aliphatic acid amide A: ALFLOW-S-10 (Stearamide), a product of Nippon Oils and Fats Co., Ltd.
Aliphatic acid amide B: ALFLOW-B-10 (Behenamide), a product of Nippon Oils and Fats Co., Ltd.

The following methods were used to measure the properties shown in the Tables:

Residual strain: Determined as described above.
Moisture transmission rate: Determined following JIS L1099 (A-1 method)
Tensile strength: Determined by averaging measurements taken in the machine and transverse directions following ASTM D-882.
Piercing resistance: Determined as described above.
Coefficient of dynamic friction: Determined according to JIS K 7125 using a 50 g slip piece.

Example 1

Polyester block copolymer A was mixed with a masterbatch prepared by adding inorganic particles A and aliphatic acid amide A to polyester block copolymer A to prepared a mixture containing 1.0 percent by weight of inorganic particles A and 0.2 percent by weight of aliphatic acid amide A. This mixture was melt extruded through a 90 mm extruder equipped with a T die with a melt temperature of 250 °C, brought into contact with a chill drum at a surface temperature of 18 °C for cooling to provide an unstretched sheet. This unstretched sheet was then biaxially stretched using a tenter type simultaneous biaxial stretching machine using a preheat temperature of 50 °C, and a stretch temperature ($T_c$) 50 °C, and a clip section temperature (the temperature of the film in the area where it is gripped by the clip) ($T_E$) of 55 °C (sufficiently cooled with cooling air before the feed section of the stretching machine) to a stretch ratio of 3.05 times in the machine (longitudinal) direction and a stretch ratio of 3.3 times in the transverse direction, thereby attaining an area stretch ratio of 10:1. The stretching was followed by exposure for 15 seconds to a heat set section temperature of 180 °C and heat treating at a relaxation section temperature of 170 °C, and allowed to cool to room temperature, yielding a 10 μm thick biaxially stretched polyester-based elastomer film. The properties of the resultant film are as shown in Table 1.

Examples 2 and 3

As shown in Table 1, the amounts of the inorganic particles A and aliphatic acid amides A used were changed from those of Example 1. Otherwise, a procedure similar to that of Example 1 was carried out to obtain a 10 μm thick biaxially stretched polyester-based elastomer film. The properties of the resultant film are as shown iri Table 1.

Example 4

The inorganic particles A were replaced with organic particles E; otherwise, a procedure similar to that of Example 1 was carried out to obtain a 10 μm thick biaxially stretched polyester-based elastomer film. The properties of the resultant film are as shown in Table 1.

Example 5

The inorganic particles A were replaced with organic particles F; otherwise, a procedure similar to that of Example 1 was carried out to obtain a 10 μm thick biaxially stretched polyester-based elastomer film. The properties of the resultant film are as shown in Table 1.

Example 6

The aliphatic acid amide A was replaced with aliphatic acid amide B; otherwise, a procedure similar to that of Example 1 was carried out to obtain a 10μm thick biaxially stretched polyester-based elastomer film. The properties of the resultant film are as shown in Table 1.

Example 7

The polyester block copolymer A was replaced with polyester block copolymer B; otherwise, a procedure similar to that of Example 1 was carried out to obtain a 10 μm thick biaxially stretched polyester-based elastomer film. The properties of the resultant film are as shown in Table 1.

The films of Examples 1 to 7 indicate that when the polyester elastomer is melt extruded from an extruder and brought into contact with a chill drum for quenching, the film did not adhere to the chill drum at all. Furthermore, the operability was good; the stretchability with a tenter type biaxial stretching machine was also good; and these films had satisfactory and low residual strain and excellent moisture transmission rates, antiblocking properties, and mechanical properties such as tensile strength, piercing resistance, and the like.

Comparative Example 1

As shown in Table 1, the amount of the inorganic particles A compounded was changed from that of Example 1. Otherwise, a procedure similar to that of Example 1 was carried out to obtain a 10 μm thick biaxially stretched polyester-based elastomer film. The properties of the resultant film are shown in Table 1. The film obtained in Example 8 had a tension set when elongated by 50 percent of 3.1 percent, falling within the scope of the present invention of not more than 10 percent; but because the amount of the inorganic particles A compounded was smaller, the film had a high coefficient of dynamic friction and slightly inferior slip properties.

Comparative Example 2

The inorganic particles A were replaced by inorganic particles B. Otherwise, a procedure similar to that of Example 1 was carried out for production of a 10 μm thick biaxially stretched polyester-based elastomer film. In the film of the Example 9, the tension set at a 50 percent extension was 3.0 percent, within the scope of the present invention of not more than 10 percent. However, because the particle size of the inorganic particle B was small, the continuous stretchability and productivity were not deemed good. The slip properties of the resultant film were also slightly inferior. The properties of the film are shown in Table 1.

Comparative Example 3

The inorganic particles A were replaced by inorganic particles C. Otherwise, a procedure similar to that of Example 1 was carried out for production of a 10μm thick biaxially stretched polyester-based elastomer film. In the film of the Example 10, the tension set at a 50 percent extension was 3.0 percent, within the scope of the present invention of not more than 10 percent. However, because inorganic particles C were an amorphous silica, the continuous stretchability and productivity were not deemed good. The slip properties of the resultant film were also slightly inferior. The properties of the film are as shown in Table 1.

Comparative Example 4

A 30 μm thick low density polyethylene film (a product of Tohcello Co., Ltd FC-S No. 300) was used as a carrier. Polyester block copolymer A was mixed with a masterbatch prepared by adding inorganic particles A and aliphatic acid amide A to polyester block copolymer A to prepare a mixture containing 1.0 percent by weight of inorganic particles A and 0.2 percent by weight of aliphatic acid amide A, with the remainder being polyester block copolymer A. This mixture was melt extruded through a 50 mm extruder equipped with a T die with a melt temperature of 250 °C, and brought into contact with a chill drum with a surface temperature of 18 °C for cooling to provide a polyethylene/polyester-based elastomer laminated film. Then, the polyethylene was peeled off the polyester block copolymer film to obtain a 10 μm thick unstretched polyester-based elastomer film. Because the resultant film was unstretched, it had a low tensile strength and low piercing resistance, and had a high tension set, which made the material inferior for use for garment fabrics. The properties of the film are as shown in Table 1.

Comparative Example 5

As described in Table 1, the amount of the inorganic particles A compounded was changed; otherwise, a procedure similar to that of Example 1 was carried out to obtain a 10 μm thick biaxially stretched polyester-based elastomer film. The properties of the resultant film are shown in Table 1. Because the material of Comparative Example 2 had an excessive amount of inorganic particle A compounded, it broke too frequently when stretched to permit formation of a useful film.

Comparative Example 6

The inorganic particles A were replaced with inorganic particles D; otherwise, a procedure similar to that of Example 1 was carried out for production of a 10 μm thick biaxially stretched polyester-based elastomer film. Because the particle size of the inorganic particles D was too large, the film broke too frequently, when stretched, to permit collecting a useful film.

Comparative Example 7

The amount of the aliphatic acid amide was changed to 0.005 percent by weight; otherwise, a melt extrusion was carried out in a manner similar to that of Example 1, but the film adhered extensively to the chill drum. As the tendency of the extrudate to peel from the chill drum gradually worsened, it was judged impossible to form film, at which point further stretching steps were halted.

Comparative Example 8

In Example 1, as described above, just before the section for gripping the sheet by the clips in the sheet feed section of the tenter type simultaneous biaxial stretch machine, the clips were sufficiently cooled by air to control the clip grip section temperature $T_E$ during the stretching at 55°C as mentioned above. On the other hand, in Reference Example 1, a stable stretching operation was secured in a manner similar to that of Example 1, and while the cross-sectional profile of the undrawn sheet was held as given above and the stretch temperature $T_c$ was at 50 °C, the cooling of the clips before the feed section of the stretching machine was stopped. Then, the clip grip section temperature $T_e$ reached 75 °C. In other words, the temperature at the clip grip section $T_E$ was at a high temperature, 20 °C higher than the stretch temperature $T_c$. When the stretching was continued under such conditions, the sheet began to break at the clip sites in about 15 minutes.

Comparative Example 9

In contrast to Reference Example 1, herein liquid nitrogen was blown towards the clips before the feeding section of the stretching machine, thereby maintaining the temperature of the clip grip section at 20 °C. Thus, the clip grip section temperature $T_E$ was lower than the stretch temperature $T_c$ by more than 20 °C. Otherwise, in a manner similar to that of Reference Example 1, the stretching was continued, and in about 10 minutes, the sheet began to break from the center section.

Example 8

The 10 μm thick biaxially stretched polyester-based elastomer film obtained in Example 1 was used. The

adhesive used was a polyurethane adhesive with 39 percent solids, which was prepared by formulating 100 parts by weight of UD-108 (a polyurethane adhesive produced by Seiko Kasei KK), 3 parts by weight of PLATAMID H-103 (Elf Atochem, Japan Company; a polyamide hot melt adhesive), 5 parts by weight of Coronate HL, an isocyanate compound a product of Nippon Polyurethane Industry Co.,Ltd, and 15 parts by weight of methylethyl ketone. The adhesive was then coated onto the film A using a photogravure roll having a 25 mesh dot pattern with wherein the dots have a depth of 250 μm, a diameter of 0.7 mm, and a spacing of 0.35 mm. The adhesive covered about 40 percent of the surface.

The fiber fabric used was a polyester woven fabric material that had been woven in a plain weave from polyester (PET) multifilament 83 decitex/72 filaments for both the warp and weft at a warp density of 110 filaments/2.54 cm and weft density of 90 filaments/2.54 cm, scoured, and treated for water repellency.

The film coated with above adhesive was then laminated to the polyester fabric material and hot bonded at a temperature of 130 °C, a pressure of 30 kPa, and a speed of 30m/min to give a film-laminated fabric A. The properties of the film and fabric A are shown in Table 2.

Example 9

The film obtained in Example 7 was formed into a film-laminated fabric B using the procedure described in Example 11. Table 2 shows the properties of the film and film-laminated fabric.

Example 10

The fiber fabric used was a nylon woven material which had been woven in a plain weave from nylon multifilament 83 decitex/72 filaments for both the warp and weft at a warp density of 110 filaments/2.54 cm and weft density of 90 filaments/2.54 cm, scoured, and treated for water repellency. Otherwise, the procedure of Example 11 was followed to obtain a film-laminated fabric C. Table 2 shows the properties of the film and film laminated fabric.

The film-laminated fabrics using films from Examples 8 to 10 having excellent moisture permeability and mechanical properties showed excellent properties: high hydrostatic pressure resistance retention and resistance to long term launderings.

Comparative Example 10

The unstretched 10 μm thick polyester-based elastomer film obtained in Comparative Example 4 was used following the procedure of Example 8 to form film-laminated fabric D. Table 2 shows the properties of the film and film-laminated fabric.

Because the film-laminated fabric D of the Comparative Example 10 used an unstretched film with inferior piercing resistance, this product was unsuitable for machine processing that included piercing through with a needle on a sewing machine or the like; was poor in wear adaptability in that a wearer got caught up when putting it on; and also after repeated flexing cycles around the elbow when worn, it was seen to sag in the film because a high tension set film had been used. Further, it had low hydrostatic pressure resistance retention and was not suitable for long-term laundry resistance.

Comparative Example 11

A polyurethane resin solution with a solids concentration of 21 percent and a viscosity of 5000 mPa (at 25 °C) from 100 parts by weight of HI-MUREN NPU-5 (an ether type polyurethane resin, a product of Dainichiseika Co. Ltd), 10 parts by weight of isopropyl alcohol, and 10 parts by weight of toluene was applied to the mold release side of EV130TPO (a mold release paper made by Lintex Company) using a comma coater to a coated thickness of 20 g/$m^2$. Then, the assembly was dried for 2 minutes at 100 °C to obtain a polyurethane resin film. In a manner similar to that of Example 1, the film was then coated with an adhesive. Table 2 shows the properties of the polyurethane resin film. This was measured in the form of the polyurethane resin film after delamination from the mold release paper.

For the fiber fabric, the polyester woven material used in Example 8 was used to be laminated to the polyurethane resin film with the adhesive coated on, and hot bonded at a temperature of 130 °C, a pressure of 30 kPa and a speed of 30m/min to obtain a film-laminated fabric E. Table 2 shows its properties.

Because the film-laminated fabric E of this Comparative Example 11 used the above polyurethane resin film instead of the polyester-based elastomer film of the present invention, it had an inferior hydrostatic pressure resistance retention, therefore, as a fiber fabric, it was inferior in resistance to long term launderings and was not suitable for use over a long period of time.

Table 1

| | Polyester Block Copolymer | Organic or Inorganic Particles | | | Aliphatic Acid Amide | | Operability | Biaxial Stretching | | Film Physical Properties | | | | |
|---|---|---|---|---|---|---|---|---|---|---|---|---|---|---|
| | | Type | Particle Size μm | Amount compounded by weight | Type | Amount compounded % by weight | | Stretch area ratio | Stretchability | Residual Strain% | Moisture transmission rate g/m$^2$. 24hr | Tensile strength MPa | Piercing resistance N/mm | Coefficient of dynamic friction |
| Ex 1 | A | A (silica) | 2.5 | 1.0 | A (StAm) | 0.2 | o | 10 | o | 2.8 | 6000 | 60 | 290 | 0.8 |
| Ex 2 | A | A (silica) | 2.5 | 2.0 | A (StAm) | 0.2 | o | 10 0 | o | 2.8 | 6200 | 58 | 300 | 0.5 |
| Ex 3 | A | A (silica) | 2.5 | 1.0 | A (StAm) | 1.0 | o | 10 | o | 2.9 | 6200 | 60 | 280 | 0.9 |
| Ex 4 | A | E (PMMA) | 4.5 | 1.0 | A (StAm) | 0.2 | o | 10 | o | 3.0 | 5900 | 58 | 270 | 0.9 |
| Ex 5 | A | (melamine) | 1.5 | 1.0 | A (StAm) | 0.2 | o | 10 | o | 2.9 | 5600 | 62 | 270 | 1.0 |
| Ex 6 | A | A (silica) | 2.5 | 1.0 | B (BhAm | 0.2 | o | 10 | o | 3.1 | 5800 | 61 | 290 | 0.9 |
| Ex 7 | B | A (silica) | 2.5 | 1.0 | A (StAm) | 0.2 | o | 10 | o | 3.7 | 3500 | 60 | 290 | 0.6 |
| Comp Ex1 | A | A (silica) | 2.5 | 0.1 | A (StAm) | 0.2 | o | 10 | o | 3.1 | 6400 | 61 | 270 | 2.5 |
| CompEx 2 | A | B (silica) | 0.5 | 1.0 | A (StAm) | 0.2 | o | 10 | □ | 3.0 | 6000 | 48 | 260 | 1.8 |
| CompEx 3 | A | C (silica*) | 2.7 | 1.0 | A (StAm) | 0.2 | o | 10 | □ | 3.0 | 5600 | 45 | 240 | 1.4 |
| CompEx 4 | A | A (silica) | 2.5 | 1.0 | A (StAm) | 0.2 | o | Was not stretched | | 13.5 | 5500 | 25 | 120 | 1.3 |
| CompEx 5 | A | A (silica) | 2.5 | 5.0 | A (StAm) | 0.2 | o | 10 | x | Film could not be obtained because of poor stretching | | | | |
| CompEx 6 | A | D (silica) | 10 | 1.0 | A (StAm) | 0.2 | o | 10 | x | Film could not be obtained because of poor stretching | | | | |

(continued)

| | Polyester Block Copolymer | Organic or Inorganic Particles | | | Aliphatic Acid Amide | | Operability | Biaxial Stretching | | Film Physical Properties | | | | |
|---|---|---|---|---|---|---|---|---|---|---|---|---|---|---|
| | | Type | Particle Size μm | Amount compounded by weight | Type | Amount compounded % by weight | | Stretch area ratio | Stretchability | Residual Strain% | Moisture transmission rate g/m$^2$. 24hr | Tensile strength MPa | Piercing resistance N/mm | Coefficient of dynamic friction |
| CompEx 7 | A | A (silica*) | 2.5 | 1.0 | A (StAm) | 0.005 | | | x | Because of adhesion to chill drum, film formation was difficult. | | | | |

Organic or inorganic particles
Silica: spherical silica
Silica*: amorphous silica
PMMA: spherical polymethyl methacrylate
Melamine: spherical melamine-formaldehyde
StAm: stearamide
BhAm: behenamide
Stretchability
o: good stretchability
□: possible to stretch, but continuous operation extending 30 minutes or longer was difficult.
X: not possible to stretch
Piercing Resistance
*: Needle did not penetrate at a 50 mm piercing [deformation] length

Table 2

| | Polyester Block Copolymer | Fabric | Film Laminated | Film Properties | | | | Resistance to Fabric Hydrostatic Pressure (kPa) | | |
|---|---|---|---|---|---|---|---|---|---|---|
| | | | | Residual strain (%) | Moisture transmission Rate (g/m$^2$·24 hr) | Tensile strength (MPa) | Piercing resistance (N/μm) | No laundering | 100 launderings | % Hydrostatic pressure retention |
| Example 8 | A | PET | A | 2.8 | 6000 | 60 | 290 | 200 | 200 | 100% |
| Example 9 | B | PET | B | 3.5 | 3500 | 60 | 290 | 270 | 260 | 96% |
| Example 10 | A | Ny | C | 2.8 | 6000 | 60 | 290 | 200 | 190 | 95% |
| Comp. Ex. 10 | A | PET | D | 13.5 | 5500 | 25 | 120* | 120 | 100 | 83% |
| Comp. Ex. 11 | - | PET | E | 3.7 | 5800 | 20 | 100* | 130 | 110 | 85% |

* The needle did not penetrate at a piercing length [deformation] of 50 mm.

## Claims

1. A moisture permeable polyester-based elastomer film comprising a polyester block copolymer, said copolymer comprising
not less than one copolyetherester elastomer having a multiple number of repeating long chain ester units (I) and short chain ester units (II) connected head-to-tail via ester linkages wherein the copolyetherester elastomer comprises 0.2 to 3.0 percent by weight of organic or inorganic particles having average diameters of between 1.0 and 7.0 μm and wherein the long chain ester units (I) are represented by Formula (i) and the short chain ester units (II) are represented by Formula (ii) below:

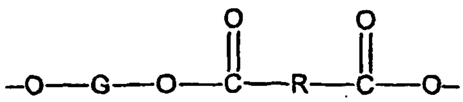
(i)

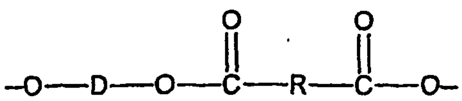
(ii)

wherein G is a divalent radical remaining after the removal of terminal hydroxyl groups from a poly(alkylene oxide) glycol having a number average molecular weight of 400 to 4000; R is a divalent radical remaining after the removal of terminal carboxyl groups from a dicarboxylic acid having a molecular weight less than 300; D is a divalent radical remaining after the removal of terminal hydroxyl groups from a diol having a molecular weight less than 250; and wherein the copolyetherester(s) contain 25 to 80 percent by weight short chain ester units, wherein said film has been subjected to a stretching treatment and has a residual strain of not more than 10 percent.

2. The moisture permeable polyester-based elastomer film of Claim 1, wherein the film has a moisture transmission rate of not less than 300 $g/m^2 \cdot 24$ hr.

3. The moisture permeable polyester-based elastomer film of Claim 1. wherein said film has a tensile strength of not less than 30 MPa and a piercing resistance of not less than 150 N/mm.

4. The moisture permeable polyester-based elastomer film of Claim 1, wherein the copolyetherester comprises 0.01 to 2.0 percent by weight of at least one aliphatic acid amide.

5. The moisture permeable polyester-based elastomer film of Claim 1, wherein the organic or inorganic particles are spherical or spheroidal particles.

6. The moisture permeable polyester-based elastomer film of claim 1 wherein G comprises 10 to 80 percent of poly (ethylene oxide) units, based on the total weight of G.

7. The moisture permeable polyester-based elastomer film of Claim 1, wherein the short chain ester units (II) are butylene terephthalate units.

8. A process for the manufacture of a moisture permeable polyester-based elastomer film comprising;
compounding a polyester block copolymer as defined in claim 1 with
0.2 to 3.0 percent by weight of organic or inorganic particles with an average particle size of 1.0 to 7.0 μm and 0.01 to 2.0 percent by weight of an aliphatic acid amide;
forming the resulting blend into a sheet form; and
subjecting the resultant ustretched sheet to a stretching treatment, thereby converting the sheet into a film having a tension set of not more than 10 percent and having a moisture transmission rate of not less than 300 $g/m^2 \cdot 24$hr.

9. The process for the manufacture of a moisture permeable polyester-based elastomer film of Claim 8, wherein the organic or inorganic particles are non-amorphous particles.

**10.** The process for the manufacture of a moisture permeable polyester-based elastomer film of Claim 8, wherein G comprises 10 to 80 percent of poly(ethylene oxide) units, based on the total weight of G.

**11.** The process for the manufacture of a moisture permeable polyester-based elastomer film of Claim 8, wherein the short chain ester units (II) are butylene terephthalate units.

**12.** The process for the manufacture of a moisture permeable polyester-based elastomer film of Claim 8, wherein the stretching treatment uses a tenter type stretching machine.

**13.** The process for the manufacture of a moisture permeable polyester-based elastomer film of Claim 12, wherein the tenter type stretching machine is a simultaneous biaxial stretching machine.

**14.** The process for the manufacture of a moisture permeable polyester-based elastomer film of Claim 13, wherein the ratio of the area of the film to the unstretched sheet is between 5:1 and 25:1.

**15.** The process for the manufacture of a moisture permeable polyester-based elastomer film of Claim 12, wherein the unstretched sheet is stretched with a tenter stretching machine having tenter clip grips, such that the clip grips are maintained at a temperature $T_E$, and the stretch temperature Tc , wherein:

$$(T_C - 20) \leq T_E \leq (T_C + 20).$$

**16.** A moisture permeable waterproof fabric comprising a polyester-based elastomer film and a fiber fabric laminated thereto,
wherein said polyester-based elastomer film being one that has been stretched at least in an uniaxial direction and that has a tensile strength of not less than 30 MPa, a piercing resistance of not less than 150 N/$\mu$m, a tension set of not more than 10 percent when elongated by 50 percent, and a moisture transmission rate of not less than 300 g/m$^2$ 24 hr; wherein said polyester-based elastomer film is as defined in claim 1.

**17.** The moisture permeable waterproof fabric of Claim 16, wherein the fabric retains hydrostatic resistance after 100 launderings of not less than 90 percent.

## Patentansprüche

**1.** Feuchtigkeitsdurchlässiger Elastomerfilm auf Polyesterbasis umfassend ein Polyester-Blockcopolymer, wobei das Copolymer Folgendes umfasst:

nicht weniger als ein Copolyetherester-Elastomer, das eine multiple Anzahl von sich wiederholenden langkettigen Estereinheiten (I) und kurzkettigen Estereinheiten (II) aufweist, die Kopf an Schwanz durch Esterverknüpfungen mit einander verbunden sind, wobei das Copolyetherester-Elastomer 0,2 bis 3,0 Gewichtsprozent organische oder anorganische Teilchen umfasst, die durchschnittliche Durchmesser zwischen 1,0 und 7,0 $\mu$m aufweisen und wobei die langkettigen Estereinheiten (I) durch die Formel (i) dargestellt sind und die kurzkettigen Estereinheiten (II) durch die Formel (ii) unten dargestellt sind:

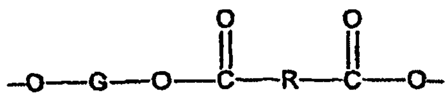

(i)

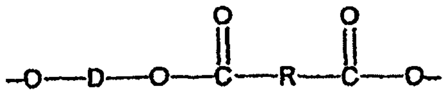

(ii)

wobei G ein zweiwertiges Radikal ist, das nach der Entfernung von endständigen Hydroxylgruppen von einem Poly(alkylenoxid)glykol verbleibt, das ein zahlendurchschnittliches Molekulargewicht von 400 bis 4000 aufweist; R ein zweiwertiges Radikal ist, das nach der Entfernung von endständigen Carboxylgruppen von einer Dicarbonsäure verbleibt, die ein zahlendurchschnittliches Molekulargewicht von weniger als 300 aufweist; D ein zweiwertiges Radikal ist, das nach der Entfernung von endständigen Hydroxylgruppen von einem Diol verbleibt, das ein Molekulargewicht von weniger als 250 aufweist; und
wobei der/die Copolyetherester 25 bis 80 Gewichtsprozent kurzkettige Estereinheiten enthält/enthalten,
wobei der Film einer Streckbehandlung unterworfen worden ist und eine restliche verformende Spannung von nicht mehr als 10 Prozent aufweist.

**2.** Feuchtigkeitsdurchlässiger Elastomerfilm auf Polyesterbasis nach Anspruch 1, wobei der Film eine Feuchtigkeitsdurchlässigkeitsrate von nicht weniger als 300 $g/m^2 \cdot 24$ h aufweist.

**3.** Feuchtigkeitsdurchlässiger Elastomerfilm auf Polyesterbasis nach Anspruch 1, wobei der Film eine Zugfestigkeit von nicht weniger als 30 MPa und eine Durchdringungswiderstandsfähigkeit von nicht weniger als 150 N/mm aufweist.

**4.** Feuchtigkeitsdurchlässiger Elastomerfilm auf Polyesterbasis nach Anspruch 1, wobei der Copolyetherester 0,01 bis 2,0 Gewichtsprozent mindestens eines aliphatischen Säureamids umfasst.

**5.** Feuchtigkeitsdurchlässiger Elastomerfilm auf Polyesterbasis nach Anspruch 1, wobei die organischen oder anorganischen Teilchen kugelförmige oder sphäroidale Teilchen sind.

**6.** Feuchtigkeitsdurchlässiger Elastomerfilm auf Polyesterbasis nach Anspruch 1, wobei G 10 bis 80 Prozent Poly (ethylenoxid)einheiten, auf das Gesamtgewicht von G bezogen, umfasst.

**7.** Feuchtigkeitsdurchlässiger Elastomerfilm auf Polyesterbasis nach Anspruch 1, wobei die kurzkettigen Estereinheiten (II) Butylenterephthalateinheiten sind.

**8.** Verfahren für die Herstellung eines feuchtigkeitsdurchlässigen Elastomerfilms auf Polyesterbasis, umfassend:

das Compoundieren eines Polyester-Blockcopolymers wie in Anspruch 1 definiert mit 0,2 bis 3,0 Gewichtsprozent organischen oder anorganischen Teilchen mit einer durchschnittlichen Teilchengröße von 1,0 bis 7,0 μm und 0,01 bis 2,0 Gewichtsprozent eines aliphatischen Säureamids;
das Formen der so gebildeten Mischung zu einer Plattenform; und
das Unterwerfen der so gebildeten ungestreckten Platte einer Streckbehandlung, wodurch die Platte in einen Film umgewandelt wird, der einen Zugverformungsrest von nicht mehr als 10 Prozent aufweist und eine Feuchtigkeitsdurchlässigkeitsrate von nicht weniger als 300 $g/m^2 \cdot 24$ h aufweist.

**9.** Verfahren für die Herstellung eines feuchtigkeitsdurchlässigen Elastomerfilms auf Polyesterbasis nach Anspruch 8, wobei die organischen oder anorganischen Teilchen nichtamorphe Teilchen sind.

**10.** Verfahren für die Herstellung eines feuchtigkeitsdurchlässigen Elastomerfilms auf Polyesterbasis nach Anspruch 8, wobei G 10 bis 80 Prozent Poly(ethylenoxid)einheiten, auf das Gesamtgesicht von G bezogen, umfasst.

**11.** Verfahren für die Herstellung eines feuchtigkeitsdurchlässigen Elastomerfilms auf Polyesterbasis nach Anspruch 8, wobei die kurzkettigen Estereinheiten (II) Butylenterephtalateinheiten sind.

**12.** Verfahren für die Herstellung eines feuchtigkeitsdurchlässigen Elastomerfilms auf Polyesterbasis nach Anspruch 8, wobei bei der Streckbehandlung eine Streckmaschine vom Spannrahmentyp eingesetzt wird.

**13.** Verfahren für die Herstellung eines feuchtigkeitsdurchlässigen Elastomerfilms auf Polyesterbasis nach Anspruch 12, wobei die Streckmaschine vom Spannrahmentyp eine simultan biaxial arbeitende Streckmaschine ist.

**14.** Verfahren für die Herstellung eines feuchtigkeitsdurchlässigen Elastomerfilms auf Polyesterbasis nach Anspruch 13, wobei das Verhältnis des Bereichs des Films zur ungestreckten Platte zwischen 5:1 und 25:1 liegt.

**15.** Verfahren für die Herstellung eines feuchtigkeitsdurchlässigen Elastomerfilms auf Polyesterbasis nach Anspruch 12, wobei die ungestreckte Platte mit einer Spannrahmenstreckmaschine gestreckt wird, die Spannrahmenklammergreifer aufweist, derart, dass die Klammergreifer bei einer Temperatur $T_E$ und der Strecktemperatur $T_c$ gehalten werden, wobei:

$$(T_c - 20) \leq T_E \leq (T_c + 20)$$

ist.

**16.** Feuchtigkeitsdurchlässiger wasserfester Stoff, umfassend einen Elastomerfilm auf Polyesterbasis und einen daran laminierten Faserstoff,
wobei der feuchtigkeitsdurchlässige Elastomerfilm auf Polyesterbasis einer ist, der mindestens in einer monoaxialen Richtung gestreckt worden ist und der eine Zugfestigkeit von nicht weniger als 30 MPa, eine Durchdringungswiderstandsfähigkeit von nicht weniger als 150 N/μm, einen Zugverformungsrest von nicht mehr als 10 Prozent nach 50 prozentiger Verlängerung und eine Feuchtigkeitsdurchlässigkeitsrate von nicht weniger als 300 $g/m^2 \cdot 24$ h aufweist, wobei der Elastomerfilm auf Polyesterbasis die in Anspruch 1 angegebene Definition aufweist.

**17.** Feuchtigkeitsdurchlässiger wasserfester Stoff nach Anspruch 16, wobei der Stoff nach 100 Wäschen eine hydrostatische Widerstandsfähigkeit von nicht weniger als 90 Prozent beibehält.

## Revendications

**1.** Film élastomère à base de polyester perméable à l'humidité comprenant un copolymère séquencé polyester, ledit copolymère comprenant
pas moins d'un élastomère de copolyéther-ester ayant un grand nombre de motifs répétitifs ester à longue chaîne (I) et ester à chaîne courte (II) reliés tête-bêche par des liaisons ester, l'élastomère de copolyéther-ester comprenant 0,2 à 3,0% en poids de particules organiques ou inorganiques ayant des diamètres moyens compris entre 1,0 et 7,0 μm et lesdits motifs ester à longue chaîne (I) étant représentés par la formule (i) et lesdits motifs ester à chaîne courte (II) étant représentés par la formule (ii) ci-dessous:

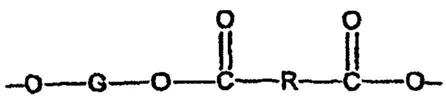
(i)

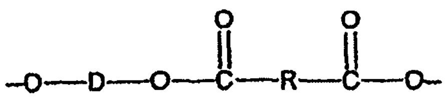
(ii)

dans lesquelles G est un radical divalent restant après l'élimination des groupes hydroxy terminaux d'un poly(oxyde d'alkylène)glycol ayant un poids moléculaire moyen en nombre de 400 à 4000; R est un radical divalent restant après l'élimination des groupes carboxy terminaux d'un acide dicarboxylique ayant un poids moléculaire inférieur à 300; D est un radical divalent restant après l'élimination des groupes hydroxy terminaux d'un diol ayant un poids moléculaire inférieur à 250; et
le ou lesdits copolyéther-esters contenant 25 à 80% en poids de motifs ester à chaîne courte;
dans lequel ledit film a été soumis à un traitement d'étirage et présente une déformation résiduelle ne dépassant pas 10%.

2. Film élastomère à base de polyester perméable à l'humidité selon la revendication 1, où le film présente un taux de transfert d'humidité supérieur ou égal à 300 $g/m^2 \cdot 24$ h.

3. Film élastomère à base de polyester perméable à l'humidité selon la revendication 1, où ledit film présente une résistance à la traction supérieure ou égale à 30 MPa et une résistance à la perforation supérieure ou égale à 150 N/mm.

4. Film élastomère à base de polyester perméable à l'humidité selon la revendication 1, dans lequel le copolyéther-ester comprend 0,01 à 2,0% en poids d'au moins un amide d'acide aliphatique.

5. Film élastomère à base de polyester perméable à l'humidité selon la revendication 1, dans lequel les particules organiques ou inorganiques sont des particules sphériques ou sphéroïdes.

6. Film élastomère à base de polyester perméable à l'humidité selon la revendication 1, dans lequel G comprend 10 à 80% de motifs poly(oxyde d'éthylène), rapporté au poids total de G.

7. Film élastomère à base de polyester perméable à l'humidité selon la revendication 1, dans lequel les motifs ester à chaîne courte (II) sont des motifs téréphtalate de butylène.

8. Procédé de fabrication d'un film élastomère à base de polyester perméable à l'humidité consistant à:

mélanger un copolymère séquencé polyester tel que défini dans la revendication 1 avec 0,2 à 3,0% en poids de particules organiques ou inorganiques ayant une granulométrie moyenne de 1,0 à 7,0 $\mu$m et 0,01 à 2,0% en poids d'un amide d'acide aliphatique;
façonner le mélange homogène résultant en feuille; et
soumettre la feuille non étirée résultante à un traitement d'étirage, ce qui convertit ainsi la feuille en un film présentant une déformation rémanente après allongement ne dépassant pas 10% et un taux de transfert d'humidité supérieur ou égal à 300 $g/m^2 \cdot 24$ h.

9. Procédé de fabrication d'un film élastomère à base de polyester perméable à l'humidité selon la revendication 8, dans lequel les particules organiques ou inorganiques sont des particules non amorphes.

10. Procédé de fabrication d'un film élastomère à base de polyester perméable à l'humidité selon la revendication 8, dans lequel G comprend 10 à 80% de motifs poly(oxyde d'éthylène), rapporté au poids total de G.

11. Procédé de fabrication d'un film élastomère à base de polyester perméable à l'humidité selon la revendication 8, dans lequel les motifs ester à chaîne courte (II) sont des motifs téréphtalate de butylène.

12. Procédé de fabrication d'un film élastomère à base de polyester perméable à l'humidité selon la revendication 8, dans lequel le traitement d'étirage fait appel à une machine à étirer du type à rame.

13. Procédé de fabrication d'un film élastomère à base de polyester perméable à l'humidité selon la revendication 12, dans lequel la machine à étirer du type à rame est une machine à étirage biaxial simultané.

14. Procédé de fabrication d'un film élastomère à base de polyester perméable à l'humidité selon la revendication 13, dans lequel le rapport de l'aire du film à l'aire de la feuille non étirée est compris entre 5:1 et 25:1.

15. Procédé de fabrication d'un film élastomère à base de polyester perméable à l'humidité selon la revendication 12, dans lequel la feuille non étirée est étirée avec une machine à étirer à rame ayant des pinces de fixation, de façon que les pinces de fixation soient maintenues à une température $T_E$, et la température d'étirage $T_c$, où:

$$(T_c - 20) \leq T_E \leq (T_c + 20)$$

16. Tissu imperméable à l'eau mais perméable à l'humidité comprenant un film élastomère à base de polyester et un tissu de fibres stratifié sur ledit film,
dans lequel ledit film élastomère à base de polyester est un film qui a été étiré au moins dans une direction uniaxiale

et qui présente une résistance à la traction supérieure ou égale à 30 MPa, une résistance à la performation supérieure ou égale à 150 N/$\mu$m, une déformation rémanente après allongement ne dépassant pas 10% après avoir été allongé de 50%, et un taux de transfert d'humidité supérieur ou égal à 300 g/$m^2$·24 h, dans lequel ledit film élastomère à base de polyester est tel que défini dans la revendication 1.

**17.** Tissu imperméable à l'eau mais perméable à l'humidité selon la revendication 16, où le tissu conserve une résistance hydrostatique après 100 lavages supérieure ou égale à 90%.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S58144178 B
- JP S6321647 B
- JP H4300823 B
- JP H10258484 B
- JP H1148417 B
- JP H11170461 B
- JP 2002337294 A
- JP 2003049492 A
- JP H11166045 B
- JP 2001158071 A
- JP 2001172409 A
- JP H220425 B
- JP 3083136 B
- JP 2002219774 A